# EUROPEAN PATENT SPECIFICATION

(11) **EP 2 195 531 B1**
(45) Date of publication and mention of the grant of the patent: **31.07.2013**
(21) Application number: 08826866.9
(22) Date of filing: 04.08.2008
(51) Int. Cl.: F03G 5/02, F02G 1/043, F02G 1/055, F02G 1/06, F02G 5/02

(54) **VARIABLE THERMAL OUTPUT COGENERATION SYSTEM**
COGENERATIONSANLAGE MIT VARIABLER WÄRMELEISTUNG
SYSTÈME DE COGÉNÉRATION À SORTIE THERMIQUE VARIABLE

(30) Priority: 02.08.2007 NZ 56033207
(43) Date of publication of application: 16.06.2010
(73) Proprietor: SUMA ALGEBRAICA S.L., 20550 Aretxabaleta (ES)
(72) Inventor: CHOKARDELL, Florin, Silviu, Gabriel, 8022 Christchurch (NZ)
(74) Representative: Igartua, Ismael
(86) International application number: PCT/NZ2008/000196
(87) International publication number: WO 2009/017431

(56) References cited:
- WO-A1-03/052328
- WO-A1-03/052328
- WO-A1-2006/135260
- WO-A1-2008/084228
- US-B1- 6 536 207

## Description

### TECHNICAL FIELD

The invention relates generally to cogeneration systems for combined generation of heat and electrical power having a variable heat output, which may have one burner.

### BACKGROUND

In a cogeneration system a heat engine is used to generate electricity, and engine coolant and exhaust gas heat exchangers are used for recovering heat from the engine coolant and exhaust of the engine.

In many applications the maximum thermal demand exceeds the amount of heat that can be extracted from the engine when operating at capacity, requiring a supplementary heat input. Typical systems allow for a variable amount of supplementary heat output by burning additional fuel and air via an auxiliary burner, to generate additional heat. The hot exhaust gases from the primary and auxiliary burners are directed to the exhaust gas heat exchanger or boiler.

A disadvantage of cogeneration systems comprising an auxiliary burner is that the auxiliary burner and associated combustion control equipment for the auxiliary burner add to the capital and operating costs of the cogeneration system, as well as to the size (and weight) of the cogeneration unit. An exemple is shown in the international publication WO03/052328.

It is an object of at least some embodiments of the invention to address the foregoing problems or at least to provide the public with a useful choice.

### SUMMARY OF THE INVENTION

In broad terms in a first aspect the invention provides a cogeneration system comprising:
an external combustion engine;
a combustion chamber having a burner for supplying heat to the external combustion engine;
a generator driven by the external combustion engine for producing electrical power output;
a heat exchanger for recovering heat from the exhaust gases of the engine to produce a thermal output;
air supply means capable of varying the flow rate of air to the engine;
fuel supply means capable of varying the flow rate of fuel to the engine; and
an electronic control system arranged to increase the rate of air and fuel supply to the engine in response to a demand on the co-generation system for a boost level of thermal output which is higher than a normal level of thermal output, in relative proportions such that thermal output of the co-generation system is increased proportionally greater than any increase in electrical power output.

The electronic control system is arranged to increase the rate of air supply to the engine proportionally more than the rate of fuel supply, in response to a demand for a boost level of thermal output.

Preferably the electronic control system is arranged to increase the rate of air and fuel supply to the engine in response to a demand on the co-generation system for a boost level of thermal power output, in relative proportions such that thermal output is increased substantially without any increase in electrical power output.

The air supply means and fuel supply means may be arranged to supply air and fuel to the engine at a first rate and in a first air:fuel ratio under said normal level of thermal output and at a second, higher rate and in a second, higher air:fuel ratio under said boost level of thermal demand. Alternatively the air supply means and fuel supply means may be arranged to supply air and fuel to the engine in a first air:fuel ratio under said normal level of thermal demand and to vary the rate of supply of air and fuel over a higher range, at a second higher air:fuel ratio, in response to a varying level of thermal demand over a range above normal thermal output. The control system may be also arranged to vary the air:fuel ratio over a range in response to said varying level of thermal demand above normal thermal output.

In broad terms in a second aspect the invention provides method of operating a cogeneration system comprising an external combustion engine, a generator driven by the external combustion engine for producing electricity, and a heat exchanger for recovering heat from the engine exhaust gases, comprising under higher thermal demand on the co-generation unit increasing the flow rate of air and fuel to the engine while varying the air:fuel ratio so that thermal power output from the co-generation system is increased at a proportionately greater rate than any increase in electrical power output.

In broad terms in a third aspect the invention provides a cogeneration system for producing electricity and heat comprising:
an external combustion engine;
a generator driven by the external combustion engine for producing electricity;
a heat exchanger for recovering heat from the engine exhaust gases;
an electronic control system arranged to increase the rate of air and fuel supply to the engine and to cause a flow or flows of additional air to mix with combustion gases from a burner of the external combustion engine to dilute the combustion gases at or before contact with a heater head or heads of the engine, in response to a demand on the co-generation system for a boost level of heat output which is higher than a normal level of thermal output such that thermal power output of the co-generation system is increased proportionately greater than any increase in electrical power output. The cogeneration system may include a bypass valve for directing part of the air flow from said fan to enter the mixing area below said burner as said flow or flows of additional air, or a fan for directing air into said mixing area below said burner as said flow or flows of additional air.

In broad terms in a fourth aspect the invention provides a method of operating a cogeneration system comprising an external combustion engine, a generator driven by the external combustion engine for producing electricity, and a heat exchanger for recovering heat from the engine exhaust gases, comprising under higher thermal demand on the co-generation system increasing the flow rate of air and fuel to a burner of the engine while also admitting additional air to mix with combustion gases from the burner at or before contact of the combustion gasses with a heater head or heads of the engine so that thermal power output is increased at a proportionately greater rate than any increase in electrical power output.

The term "comprising" as used in this specification means "consisting at least in part of". When interpreting each statement in this specification that includes the term "comprising", features other than that or those prefaced by the term may also be present. Related terms such as "comprise" and "comprises" are to be interpreted in the same manner.

### BRIEF DESCRIPTION OF THE DRAWINGS

The invention is further described by way of example only and with reference to the following drawings in which:
Figure 1 is a schematic diagram of a first preferred embodiment of a cogeneration system of the invention,
Figure 2 is a representative control curve utilized by the cogeneration system of Figure 1,
Figure 3 is a schematic diagram of a second preferred embodiment of a cogeneration system of the invention, and
Figure 4 is a schematic diagram of a third preferred embodiment of a cogeneration system of the invention.

### DETAILED DESCRIPTION OF PREFERRED EMBODIMENTS

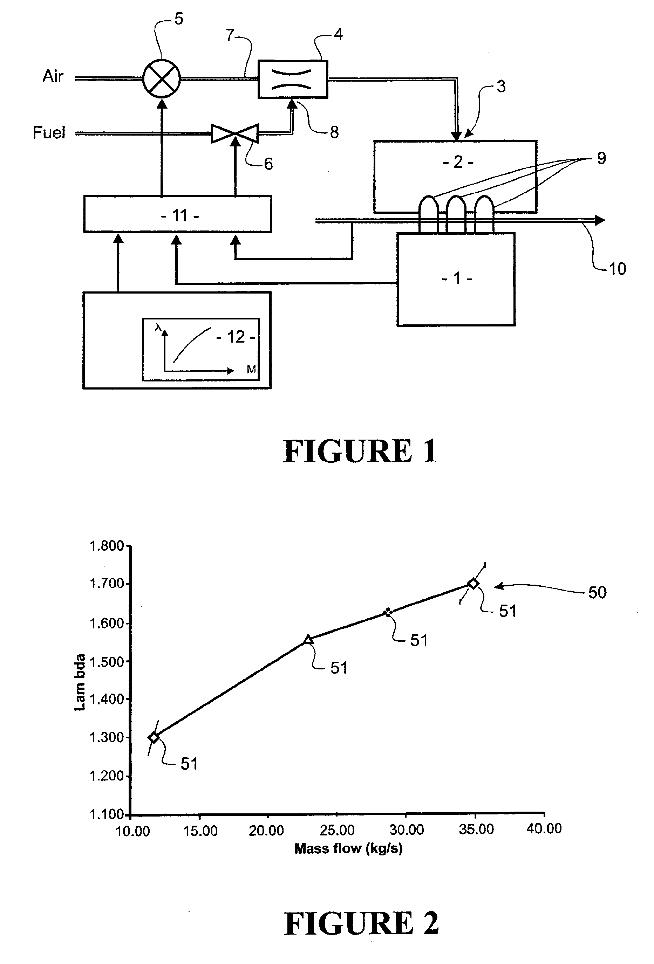

Preferring to Figure 1, a cogeneration system comprises a Stirling generator for generating electricity and heat. The Stirling generator comprises an external combustion engine comprising a Stirling engine 1 coupled to an electric generator for producing electricity. The Stirling engine 1 has a combustion chamber over the hot end of the engine, comprising a burner 2 which is supplied with air and fuel at inlet 3, which are premixed at a mixer 4. The flow of air is controlled by an air control means 5 and the flow rate of fuel to the mixer is controlled by a fuel control means 6. The air control means 5 may be a fan with a variable speed electric motor or a flap moved by a solenoid or motor to vary the size of an air inlet aperture for example, and the fuel control means 6 may be an electronically controlled valve or injector. The air control means controls the flow rate of air to the mixer 4 at inlet 7 and the fuel control means controls the flow rate of fuel such as natural gas (LPG or CNG) to the mixer 4 at inlet 8. Combustion occurs in the combustion chamber which heats one or more heater heads 9 extending into the combustion chamber of one or more engine cylinders, of the Stirling engine, to drive the engine and generator to generate electrical power. Exhaust gases pass from the combustion chamber as indicated at 10 to an exhaust gas heat exchanger. A cooling or heat transfer medium such as water or other liquid or air or other gas circulates through the exhaust gas heat exchanger to take up exhaust gas heat which is used typically for water or space heating. Additionally or alternatively a cooling or heat transfer medium may also circulate through the engine to extract heat at the cold end of the engine.

The cogeneration system comprises an electronic control system 11 which can be implemented in hardware or software or both. In this embodiment the electronic control system controls both the air supply means 5 and fuel supply means 6 to alter the flow rates of both air and fuel to the engine as further described below. The electronic control system 11 receives a signal or signals control input signals indicated of any one or more of thermal power output of the system for example via a temperature sensor of the exhaust gases for example, air flow rate, determined from the speed of fan 5 for example, fuel flow rate, and combustion chamber temperature.

The electronic control system 11 has stored in memory one or more representations of a control curve 12, or information representative of such control curve(s). Figure 2 shows an example control curve 50 which comprises a series of points 51 plotted on a graph of excess air or lambda, as indicative of adiabatic flame temperature i.e. maximum heat input, from which is subtracted the heat used by the engine which is in turn determined by the electrical output and electrical efficiency at that operating point, or a combination of both, versus electric power output, for that co-generation unit. Different points on the curve represent constant electrical power output, for example 1kW of electrical power, but varying thermal output, for example 6.34kW to 14.8kW of thermal power.

In normal operation (non-peak thermal demand condition) fuel and air are mixed and supplied to the engine in a predetermined ratio, and are combusted in the combustion chamber 2 to produce combustion gases at a temperature which may be designated a normal operating temperature T_{9Normal}. The combustion gases circulate around the heater heads of the engine and transfer heat to the engine, thus reducing their temperature to T_{10Normal}, and then pass from the combustion chamber to the exhaust heat exchanger. Under higher or peak thermal demand, when more thermal power is demanded of the system, the control system 11 increases both the air flow rate and the fuel flow rate, but in different proportions so that the air:fuel ratio is also increased, according to the control curve 50, to increase the combustion gases mass flow through the engine whilst at the same time reducing the combustion temperature. The temperature of the combustion gases in this boost mode may be designated to temperature T_{9Boost}, which is lower than T_{9Normal}. The power output of the Stirling engine is primarily dependent on the heat input through the heater heads 9 which is in turn proportional to the mass flow of the combustion gases multiplied with the temperature differential between the temperature T₉ of the combustion gases before contact with the engine's hot end and the temperature T₁₀ of the gases after contact with the engine's hot end. The thermal output of the cogeneration system is proportional to the mass flow of the combustion gases through the engine multiplied with the temperature differential between the temperature T₁₀ of the combustion gases entering the exhaust heat exchanger and the temperature of the cooling medium which passes through the exhaust heat exchanger (water or air). The increase in mass flow rate in boost mode, under higher thermal demand, if the temperature of the combustion gases remained constant at T_{9Normal}, would raise the heat input through the hot end of the engine and increase engine output and electrical power generated. In the system of the invention the air:fuel ratio is increased simultaneously, which reduces the burn temperature in the combustion chamber below T_{9Normal} to T_{9Boost} which reduces the heat input to the hot end of the engine under the higher mass flow rate, preferably to an extent so that the heat input and thus the electrical output of the system remain substantially the same. At the same time the increase in mass flow rate of exhaust gases through the exhaust gas heat exchanger provides the greater thermal output demanded of the system. The control system 11 may simply switch the air control means 5 and fuel control means 6 between a lower air and fuel input level at a first air:fuel ratio for normal mode operation, and a higher air and fuel input level, almost at a higher air:fuel ratio for boost mode operation, or may be arranged to vary the air and fuel supply and the air:fuel ratio over a range in response to a level of higher thermal output demand which also varies over a range.

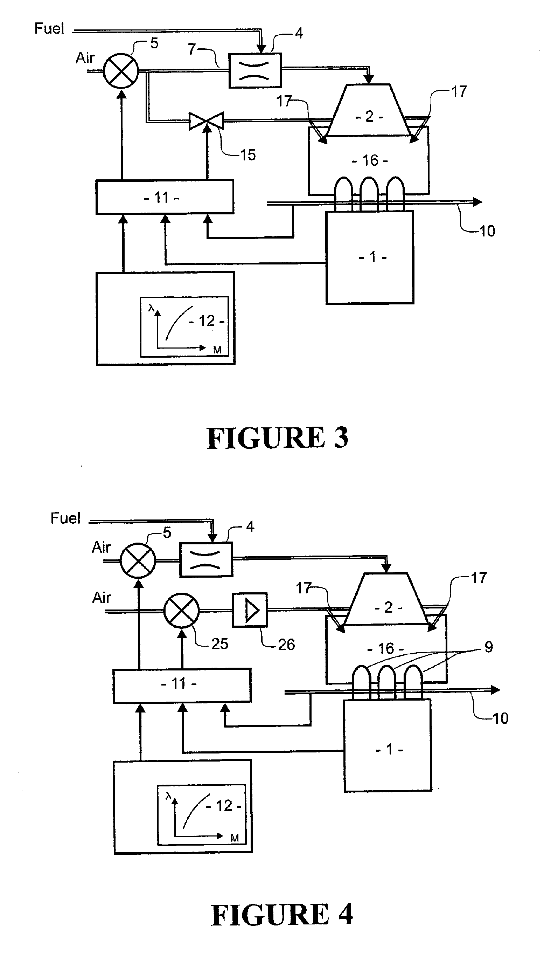

Figure 3 shows a second preferred embodiment cogeneration system of the invention. In Figure 3 the same reference numerals indicate the same elements as in Figure 1. In this embodiment in normal operation, air driven by fan 5 and fuel are mixed in mixer 4 and are supplied to burner 2, and an air bypass valve 15 is closed. In boost mode under higher thermal demand, in this embodiment the control system increases the speed of fan 5 which increases the mass flow rate of air, and of fuel drawn into the air flow, but at the same air:fuel ratio to the burner 2 as in normal mode, while the electronic control system 11 also causes air bypass valve 15 to open. This diverts some air from fan 5 to enter at inlets 17 directly into a mixing area 16 below burner 2. This additional air entering the mixing area 16 via one or more inlets 17 dilutes the combustion gases at the hot end of the engine to a lower temperature, which compensates for the higher mass flow rate which would otherwise increase heat input through the hot end of the engine and increase engine and generator output. Thus in this embodiment the increase in mass flow rate through the system to meet the higher thermal demand in boost mode is compensated for by the addition of cooling air to reduce the gas temperature after combustion, so that the heat input to the engine under the higher mass flow rate via the heater heads remains substantially the same. In this embodiment the electronic control system 11 controls the speed of fan 5, and operation of the air bypass valve 15.

Figure 4 shows a further embodiment. Again similar reference numerals indicate similar elements unless indicated otherwise. In this embodiment in boost mode under higher thermal demand, the control system 11 increases the speed of fan 5 which increases the mass flow rate of both air and fuel drawn into mixer 4, while the air:fuel ratio fed to the burner 2 remains the same. Simultaneously the control system 11 energises secondary fan 25 to drive additional air to enter mixing area 16 below burner 2 in the combustion chamber, via one or more inlets 17, to dilute the combustion gases at the hot end of the engine to a lower temperature to compensate for the higher mass flow rate as in the embodiment of Figure 3. Thus in this embodiment as in the embodiment of Figure 3, the increase in mass flow rate through the system to meet the higher thermal demand in boost mode, is compensated for by the addition of diluting cooling air to reduce the combustion gas temperature so that the temperature of the hot end of the engine under the higher mass flow rate remains substantially the same. In this embodiment the electronic control system 11 controls the speed of fan 5, and the secondary fan 25. A one way valve 26 may also be provided to prevent blow back of combustion gases.

In the embodiments described above the air control means is between an air inlet into the cogeneration system and the combustion chamber. Alternatively the air control means such as an electric fan may be positioned after an exhaust gas outlet from the combustion chamber and control the flow of air into the combustion chamber by controlling the flow of exhaust gases from the combustion chamber.

While the invention has been described in relation to a cogeneration system comprising a single burner, as an alternative to providing a second or boost burner to enable variation or increase in thermal output, it is possible that the invention may be applied to a cogeneration system comprising multiple burners, to enable variation in the thermal output obtained from one burner, with switching in or out of a second burner enabling further variation in thermal and/or electrical output of the cogeneration system

Aspects of the present invention have been described by way of example only and it should be appreciated that modifications and additions may be made thereto without departing from the scope thereof as defined in the accompanying claims.

## Claims

1. A cogeneration system comprising:
an external combustion engine (1);
a combustion chamber having a burner (2) for supplying heat to the external combustion engine;
a generator driven by the external combustion engine for producing electrical power output;
a heat exchanger for recovering heat from the exhaust gases of the engine to produce a thermal output;
air supply means (5) capable of varying the flow rate of air to the engine;
fuel supply means (6) capable of varying the flow rate of fuel to the engine; and
an electronic control system (11) arranged to increase the rate of air and fuel supply to the engine in response to a demand on the co-generation system for a boost level of thermal output which is higher than a normal level of thermal output, in relative proportions such that thermal output of the co-generation system is increased proportionally greater than any increase in electrical power output; **characterised in that**:
the electronic control system (11) is arranged to increase the rate of air supply to the engine proportionally more than the rate of fuel supply, in response to a demand for a boost level of thermal output.

2. The cogeneration system according to claim 1 wherein the electronic control system (11) is arranged to increase the rate of air and fuel supply to the engine in response to a demand on the co-generation system for a boost level of thermal power output, in relative proportions such that thermal output is increased substantially without any increase in electrical power output.

3. The cogeneration system according to claim 1 or 2 wherein the air supply means (5) and fuel supply means (6) are arranged to supply air and fuel to the engine in a first air:fuel ratio under said normal level of thermal output and in a second, higher air:fuel ratio under said boost level of thermal demand.

4. The cogeneration system according to any one of claims 1 to 3 wherein the air supply means (5) and fuel supply means (6) are arranged to supply air and fuel to the engine at a first rate and in a first air:fuel ratio under said normal level of thermal output and at a second, higher rate and in a second, higher air:fuel ratio under said boost level of thermal demand.

5. The cogeneration system according to any one of claims 1 to 3 wherein the air supply means and fuel supply means are arranged to supply air and fuel to the engine in a first air:fuel ratio under said normal level of thermal demand and to vary the rate of supply of air and fuel over a higher range, at a second higher air:fuel ratio, in response to a varying level of thermal demand over a range above normal thermal output.

6. The cogeneration system according to claim 5 wherein the control system is also arranged to vary the air:fuel ratio over a range in response to said varying level of thermal demand above normal thermal output.

7. The cogeneration system according to any one of claims 1 to 6 wherein the electronic control system comprises stored in memory one or more representations of a non-linear control curve or information representative of such control curve(s).

8. The cogeneration system according to any one of claims 1 to 7 wherein the air supply means is between an air inlet to the cogeneration system and the combustion chamber of the engine.

9. The cogeneration system according to any one of claims 1 to 7 wherein the air supply means is after an exhaust gas outlet from the combustion chamber and is arranged to affect the flow of air into the combustion chamber by affecting the flow of exhaust gases from the combustion chamber.

10. The cogeneration system according to any one of claims 1 to 9 wherein the external combustion engine is a Stirling engine.

11. The cogeneration system according to claim 1 wherein the electronic control system is arranged to increase the rate of air and fuel supply to the engine and cause a said flow or flows of additional air in response to a demand on the co-generation system for a boost level of thermal power output such that thermal power is increased substantially without any increase in electrical power output.

12. A method of operating a cogeneration system comprising an external combustion engine (1), a generator driven by the external combustion engine for producing electricity, and a heat exchanger for recovering heat from the engine exhaust gases, comprising under higher thermal demand on the co-generation system:
arranging an electronic control system (11) to increase the rate of air and fuel supply to the engine in response to a demand on the co-generation system for a boost level of thermal output which is higher than a normal level of thermal output, in relative proportions such that thermal output of the co-generation system is increased proportionally greater than any increase in electrical power output, **characterised in that** the electronic control system (11) is arranged to increase the rate of air supply to the engine proportionally more than the rate of fuel supply, in response to a demand for a boost level of thermal output.

13. A method according to claim 12, wherein the system increases the flow rate of air and fuel to a burner of the engine while also admitting additional air to mix with combustion gases from the burner at or before contact of the combustion gasses with a heater head or heads of the engine so that thermal power output is increased at a proportionately greater rate than any increase in electrical power output.

## Patentansprüche

1. Kogenerationssystem, umfassend;
ein externer Verbrennungsmotor (1);
eine Brennkammer mit einem Brenner (2), um Wärme an den externen Verbrennungsmotor zu liefern;
einen Generator, der vom externen Verbrennungsmotor angetrieben wird, um eine elektrische Ausgangsleistung zu erzeugen;
einen Wärmetauscher, um Wärme von den Abgasen des Motors wiederzugewinnen, um eine Wärmeleistung zu erzeugen,
Luftversorgungsmittel (5), die dazu in der Lage sind, den Durchsatz von Luft an den Motor zu variierten;
Brennstoffversorgungsmittel (6), die dazu in der Lage sind, den Durchsatz von Brennstoff an den Motor zu variierten; und
ein elektronisches Steuerungssystem (11), das angeordnet ist, um den Durchsatz der Luft- und Brennstoffversorgung an den Motor in Antwort auf den Bedarf des Kogenerationssytems eines Ladeniveaus der Wärmeleistung, das höher als das normale Niveau der Wärmleistung ist, in relativen Proportionen zu erhöhen, so dass die Wärmeleistung des Kogenerationssystems proportional stärker erhöht wird als jeder Erhöhung der elektrischen Ausgangsleistung, **dadurch gekennzeichnet, dass**
das elektronische Steuerungssystem (11) angeordnet ist, um den Durchsatz der Luftversorgung an den Motor proportional stärker als den Durchsatz der Brennstoffversorgung zu erhöhen, in Antwort auf einen Bedarf eines Ladeniveaus der Wärmeleistung.

2. Kogenerationssystem nach Anspruch 1, wobei das elektronische Steuerungssystem (11) angeordnet ist, um den Durchsatz der Luft- und Brennstoffversorgung an den Motor in Antwort auf einen Bedarf des Kogenerationssystems eines Ladeniveaus des Wärmleistungsausgangs in relativen Proportionen zu erhöhen, so dass die Wärmeleistung im Wesentlichen ohne eine Erhöhung der elektrischen Ausgangsleistung erhöht wird.

3. Kogenerationssystem nach Anspruch 1 oder 2, wobei
die Luftversorgungsmittel (5) und die Brennstoffversorgungsmittel (6) angeordnet sind, um Luft und Brennstoff an den Motor in einem ersten Luft-Kraftstoff-Verhältnis unter der normalen Ebene der Wärmeleistung und in einem zweiten, höheren Luft-Kraftstoff-Verhältnis unter dem Ladeniveau des Wärmebedarfs zu liefern

4. Kogenerationssystem nach einem der Ansprüche 1 bis 3, wobei die Luftversorgungsmittel (5) und die Brennstoffversorgungsmittel (6) angeordnet sind, um Luft und Brennstoff an den Motor in einem ersten Durchsatz und in einem ersten Luft-Kraftstoff-Verhältnis unter dem normalen Niveau der Wärmeleistung und in einem zweiten, höheren Durchsatz und in einem zweiten Luft-Kraftstoff-Verhältnis unter dem Ladeniveau des Wärmebedarfs zu liefern

5. Kogenerationssystem nach einem der Ansprüche 1 bis 3, wobei die Luftversorgungsmittel und die Brennstoffversorgungsmittel angeordnet sind, um Luft und Brennstoff an den Motor in einem ersten Luft-Kraftstoff-Verhältnis unter dem normalen Niveau des Wärmebedarfs zu liefern und die den Durchsatz der Lieferung von Luft und Brennstoff in einen höheren Bereich bei einem zweiten höheren Luft-Kraftstoff-Verhältnis zu variieren, in Antwort auf ein variierendes Niveau des Wärmebedarfs in einem Bereich über dem normalen Wärmeleistung.

6. Kogenerationssystem nach Anspruch 5, wobei das Steuerungssystem auch angeordnet ist, um das Luft-Brennstoff-Verhältnis in einem Bereich zu variieren, in Antwort auf das variierende Niveau des Wärmebedarfs über dem der normalen Wärmeleistung.

7. Kogenerationssystem nach einem der Ansprüche 1 bis 6, wobei
das elektronische Steuerungssystem, abgelegt im Speicher, eine oder mehrere Darstellungen einer nicht linearen Steuerungskurve oder Information, die repräsentativ für (eine) derartige Steuerungskurve(n) ist, umfasst.

8. Kogenerationssystem nach einem der Ansprüche 1 bis 7, wobei sich das Luftversorgungsmittel zwischen einem Lufteinlass in das Kogenerationssystem und der Brennkammer des Motors befindet.

9. Kogenerationssystem nach einem der Ansprüche 1 bis 7, wobei sich das Luftversorgungsmittel hinter einem Abgasauslass aus der Brennkammer befindet und angeordnet ist, um den Luftstrom in die Brennkammer durch Beeinflussung des Stroms von Abgasen aus der Brennkammer zu beeinflussen.

10. Kogenerationssystem nach einem der Ansprüche 1 bis 9, wobei der externe Verbrennungsmotor ein Stirlingmotor ist.

11. Kogenerationssystem nach Anspruch 1, wobei das elektronische Steuerungssystem angeordnet ist, um den Durchsatz der Luft- und Brennstoffversorgung an den Motor zu erhöhen und einen Strom oder Ströme von zusätzlicher Luft in Antwort auf einen Bedarf des Kogenerationssytems eines Ladeniveaus des Wärmeleistungsausgangs zu verursachen, so dass die Wärmeleistung im Wesentlichen ohne eine Erhöhung der elektrischen Leistungsausgabe erhöht wird.

12. Verfahren zum Betrieb eines Kogenerationssystems, umfassend einen externen Verbrennungsmotor (1), einen Generator, der vom externen Verbrennungsmotor angetrieben wird, um Elektrizität zu erzeugen, und einen Wärmetauscher, um Wärme von den Abgasen des Motors wiederzugewinnen, umfassend, bei hohem Wärmebedarf des Kogenerationssystems:
Anordnung des elektronischen Steuerungssystems (11), um den Durchsatz der Luft- und Brennstoffversorgung an den Motor in Antwort auf einen Bedarf des Kogenerationssytems eines Ladeniveaus der Wärmeleistung, das höher als das normale Niveau des der Wärmeleistung ist, in relativen Proportionen zu erhöhen, so dass die Wärmeleistung des Kogenerationssystems proportional stärker erhöht wird als jede Erhöhung der elektrischen Leistungsausgabe, **dadurch gekennzeichnet, dass** das elektronische Steuerungssystem (11) angeordnet ist, um den Durchsatz der Luftversorgung an den Motor proportional stärker als an den Durchsatz der Brennstoffversorgung zu erhöhen, in Antwort auf einen Bedarf eines Ladeniveaus der Wärmeleistung.

13. Verfahren nach Anspruch 12, wobei das System den Durchsatz von Luft und Brennstoff an einen Brenner des Motors erhöht, während auch ermöglicht wird, dass sich zusätzliche Luft mit den Brenngasen vom Brenner bei oder vor dem Kontakt der Brenngase mit einem Heizkopf oder Heizköpfen des Motors mischen, so dass der Wärmeleistungsausgang mit einem proportional höheren Durchsatz als jede Erhöhung des elektrischen Leistungsausgangs erhöht wird.

## Revendications

1. Système de cogénération, comprenant :
un moteur à combustion externe (1) ;
une chambre de combustion ayant un brûleur (2) pour fournir de la chaleur au moteur à combustion externe ;
un générateur entraîné par le moteur à combustion externe pour produire une puissance électrique de sortie ;
un échangeur de chaleur pour récupérer de la chaleur à partir des gaz de combustion du moteur pour produire une puissance thermique ;
des moyens de fourniture d'air (5) capables de faire varier le débit d'air destiné au moteur ;
des moyens de fourniture de combustible (6) capables de faire varier le débit de combustible destiné au moteur ; et
un système de commande électronique (11) agencé pour augmenter le rythme de fourniture d'air et de combustible destiné au moteur en réponse à une demande adressée au système de cogénération d'un niveau accru de puissance thermique qui est supérieur à un niveau normal de puissance thermique, dans des proportions relatives telles que la puissance thermique du système de cogénération est augmentée d'une façon qui est proportionnellement plus importante que toute augmentation de la puissance électrique de sortie ; **caractérisé en ce que**
le système de commande électronique (11) est agencé pour augmenter le rythme de fourniture d'air destiné au moteur proportionnellement plus que le rythme de fourniture de combustible, en réponse à une demande de niveau accru de puissance thermique.

2. Système de cogénération selon la revendication 1, dans lequel le système de commande électronique (11) est agencé pour augmenter le rythme de fourniture d'air et de combustible destiné au moteur en réponse à une demande adressée au système de cogénération d'un niveau accru de puissance thermique de sortie dans des proportions relatives telles que la puissance thermique est augmentée essentiellement sans aucune augmentation de la puissance électrique de sortie.

3. Système de cogénération selon la revendication 1 ou 2, dans lequel les moyens de fourniture d'air (5) et les moyens de fourniture de combustible (6) sont agencés pour fournir de l'air et du combustible au moteur dans un premier rapport air : combustible en présence dudit niveau normal de puissance thermique et dans un deuxième rapport air : combustible plus élevé en présence dudit niveau accru de la demande thermique.

4. Système de cogénération selon l'une quelconque des revendications 1 à 3, dans lequel les moyens de fourniture d'air (5) et les moyens de fourniture de combustible (6) sont agencés pour fournir de l'air et du combustible au moteur à un premier rythme et dans un premier rapport air : combustible en présence dudit niveau normal de puissance thermique, et à un deuxième rythme plus élevé et dans un deuxième rapport air : combustible plus élevé en présence dudit niveau accru de la demande thermique.

5. Système de cogénération selon l'une quelconque des revendications 1 à 3, dans lequel les moyens de fourniture d'air et les moyens de fourniture de combustible sont agencés pour fournir de l'air et du combustible au moteur dans un premier rapport air : combustible en présence dudit niveau normal de demande thermique et pour faire varier le rythme de fourniture d'air et de combustible sur une plage plus grande, dans un deuxième rapport air : combustible plus élevé, en réponse à un niveau variable de demande thermique sur une plage au-dessus de la puissance thermique normale.

6. Système de cogénération selon la revendication 5, dans lequel le système de commande est également agencé pour faire varier le rapport air : combustible sur une plage en réponse audit niveau variable de demande thermique au-dessus de la puissance thermique normale.

7. Système de cogénération selon l'une quelconque des revendications 1 à 6, dans lequel le système de commande électronique comprend une ou plusieurs représentations, enregistrées dans une mémoire, d'une courbe de commande non linéaire ou des informations représentatives d'une telle courbe de commande ou de telles courbes de commande.

8. Système de cogénération selon l'une quelconque des revendications 1 à 7, dans lequel les moyens de fourniture d'air (5) sont placés entre une entrée d'air conduisant dans le système de cogénération et la chambre de combustion du moteur.

9. Système de cogénération selon l'une quelconque des revendications 1 à 7, dans lequel les moyens de fourniture d'air sont placés après une sortie de gaz de combustion en provenance de la chambre de combustion et sont agencés pour agir sur le flux d'air entrant dans la chambre de combustion en agissant sur le flux de gaz de combustion en provenance de la chambre de combustion.

10. Système de cogénération selon l'une quelconque des revendications 1 à 9, dans lequel le moteur à combustion externe est un moteur Stirling.

11. Système de cogénération selon la revendication 1, dans lequel le système de commande électronique est agencé pour augmenter le rythme de fourniture d'air et de combustible destiné au moteur et pour provoquer un dit flux ou desdits flux d'air supplémentaire en réponse à une demande adressée au système de cogénération d'un niveau accru de puissance thermique de sortie de telle sorte que la puissance thermique est augmentée essentiellement sans aucune augmentation de la puissance électrique de sortie.

12. Procédé de mise en oeuvre d'un système de cogénération comprenant un moteur à combustion externe (1), un générateur entraîné par le moteur à combustion externe pour produire de l'électricité, et un échangeur de chaleur pour récupérer de la chaleur en provenance des gaz d'échappement du moteur, comprenant en présence d'une demande thermique plus élevée adressée au système de cogénération :
l'agencement d'un système de commande électronique (11) pour augmenter le rythme de fourniture d'air et de combustible destiné au moteur en réponse à une demande adressée au système de cogénération d'un niveau accru de puissance thermique qui est plus élevé qu'un niveau normal de puissance thermique, dans des proportions relatives telles que la puissance thermique du système de cogénération est augmentée d'une façon qui est proportionnellement plus importante que toute augmentation de la puissance électrique de sortie, **caractérisé en ce que** le système de commande électronique (11) est agencé pour augmenter le rythme de fourniture d'air au moteur proportionnellement plus que le rythme de fourniture de combustible, en réponse à une demande d'un niveau accru de puissance thermique.

13. Procédé selon la revendication 12, dans lequel le système augmente le débit d'air et de combustible destiné à un brûleur du moteur tout en admettant de l'air supplémentaire destiné à être mélangé aux gaz de combustion en provenance du brûleur ou avant le contact des gaz de combustion avec une tête ou des têtes d'élément de chauffage du moteur de sorte que la puissance thermique de sortie est augmentée à un rythme proportionnellement plus élevé que toute augmentation de la puissance électrique de sortie.
